# EUROPEAN PATENT APPLICATION

(11) **EP 3 131 344 A1**
(43) Date of publication of application: **15.02.2017**
(21) Application number: 15180811.0
(22) Date of filing: 12.08.2015
(51) Int. Cl.: H04W 48/16, H04W 40/00, H04W 84/00

(54) **METHOD AND SYSTEM FOR DISCOVERY OF ACCESS AGGREGATION POINTS FOR BONDING APPROACHES IN A TELECOMMUNICATION NETWORK**

(71) Applicant: Deutsche Telekom AG, 53113 Bonn (DE)
(72) Inventor: BAYER, Nico, 61231 Bad Nauheim (DE); SIVCHENKO, Dmitry, 64331 Weiterstadt (DE)
(74) Representative: Vossius & Partner Patentanwälte Rechtsanwälte mbB

(57) **Abstract**

This invention relates to a method and system for the discovery of suitable AAP nodes to provide bonding functionality in an operator network. The presented solution uses multicast AAP discovery messages send by the bonding client for the discovery of AAP-Nodes in the operator network. These AAP discovery messages are send by the bonding client over all available links which are intended to be used for bonding. The AAP-Nodes within the network will receive a multitude of the AAP discovery messages from the same bonding client. Upon this event the AAP-Nodes will reply using an AAP reply message. The bonding client will receive a multitude of AAP reply messages and will be able to reconstruct the logical network topology, in particular the location of cross over nodes, based on the information contained in the multitude of AAP reply messages.

## Description

### TECHNICAL FIELD OF THE INVENTION

This invention relates to the field of telecommunication, more specifically to the field of network technology. The invention specifically relates to a method and system for discovery of access aggregation points for bonding approaches in a telecommunication network, a bonding client preferably configured for performing the method and/or for use in such a system and an access node preferably configured for performing the method and/or for use in such a system.

### BACKGROUND OF THE INVENTION

Nowadays, different network operators as well as Over-The-Top (OTT) players offer products utilising simultaneous usage of different access technologies. Examples are the "Hybrid Access" product of Deutsche Telekom, combing Digital Subscriber Line (DSL) and Long Term Evolution (LTE) access technologies, c.f. the Magenta Zuhause Hybrid Product link [1], the Mobile Load Balancing Router (MLBR) solution used within trains, c.f., patent document [2], or custom solutions, e.g., by Viprinet, c.f., the Product link [3].

The main goal of these products is to increase the available bandwidth for subscribers and to increase the reliability of data transfer. These goals are achieved by bonding resources of different access technologies. By using intelligent bonding algorithms also resources of very different access technologies with respect to delay, bandwidth, jitter, packet loss, etc. can be bonded. Today, networking nodes normally only use one of the available interfaces for communication. In general the selection of interfaces to be used is based on a hierarchical policy. Smartphones for example usually prefer the Wi-Fi interface over the 3GPP interface while laptops prefer the Ethernet interface over the Wi-Fi interface. As a result the maximum bandwidth perceived by the terminal is limited to the bandwidth available by the selected network interface even if other interfaces are available. Assuming the possibility of simultaneous usage of all available interfaces the perceived bandwidth will increase significantly. In an ideal case the overall bandwidth per networking device is simply the sum of the bandwidths provided by each interface. In case of failure in any of the available network interfaces/networks, resources of remaining access interfaces and networks are still used, so that the reliability is increased.

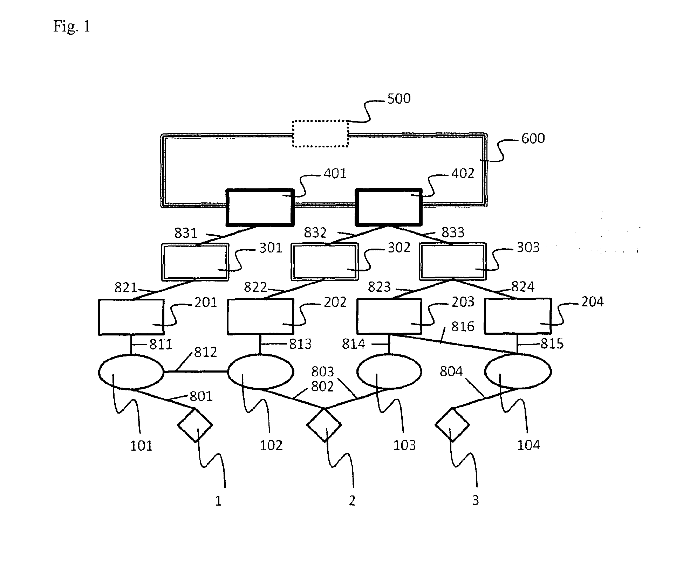

Generally, all these solutions follow the same principle shown in Figure 1. A bonding client 1, e.g., a user device or access point, is connected to at least one network node, e.g., via Wi-Fi to a DSL Customer Premises Equipment at user's premises. Or a bonding client 2, is multi-homed and it could be connected to multiple access points at the same time. In the given Example access point, i.e., the bonding clients 101 to 104, has at least one backbone connection to the operators transport network. In some cases multiple backbone connections to the transport network might be available, e.g., bonding client 102. These backbone connections can be wired connection, e.g., a DSL connection, as well as a wireless connection, e.g., an LTE link.

In an IP network the bonding functionality is provided by an access aggregation point (AAP). Different types of network nodes can be configured to provide AAP functionality. The AAP terminates connections from bonding clients, e.g., access points or user devices, and performs necessary functionalities to recover streams of packets received over different ways, e.g., to recover packet order. Additionally, the AAP performs packet scheduling for the downlink direction from the network towards the bonding clients.

Today's solutions work in such a way that an AAP is placed somewhere in the Internet and traffic of the different paths is directed to the AAP using tunnels.

### SUMMARY OF THE INVENTION

It is an object of the present invention to provide a method and system for discovery of access aggregation points for bonding approaches in a telecommunication network, a bonding client preferably configured for performing the method and/or for use in such a system and an access node preferably configured for performing the method and/or for use in such a system.

This object is solved with the features of the independent claims. The dependent claims relate to further aspects of the invention.

The present inventors found that selecting a suitable location in the network where the AAP functionality is provided is advantageous. The present inventors particularly found that today's solutions using an approach where an AAP is placed somewhere in the Internet and traffic of the different paths is directed to the AAP using tunnels does not provide the best performance in terms of delay or signalling/protocol overhead. In order to improve the network performance the AAP should be closer to the bonding client. This has the advantage to reduce the load in the core network and to reduce the delay and possible packet reordering or jitter variation for packets between the bonding client and the APP, consequently also between users and their communication targets.

Therefore the present inventors propose for future networks that the AAP functionality is provided within the transport network of the network operator. In an ideal case the AAP functionality is provided at the location or close to an access node through which the different packet streams pass, this is defined as a cross over node. For a practical case the bonding can be performed on different access nodes and in different hierarchical levels. In a future network a plurality of access nodes can be configured to provide AAP functionality. Therefore, a large quantity of AAPs might exist within a single network. For example several tens or even several hundreds of (possible) AAPs might exist within the single network. The present invention provides a method for discovery of one or several most suitable access nodes providing AAP functionality for link bonding. In a next step one or several suitable access nodes providing AAP functionality for link bonding can be selected.

Herein, an access node being configured to provide AAP functionality or the combination of an access node and a device providing AAP functionality, being preferably one functional unit in a network, are referred to as AAP-Nodes.

This invention relates to a method and system for the discovery of suitable AAP nodes to provide bonding functionality in an operator network. The presented solution preferably uses multicast AAP discovery messages send by the bonding client for the discovery of AAP-Nodes in the operator network. These AAP discovery messages are send by the bonding client over all available links which are intended to be used for bonding. All access nodes in the operator network which may provide AAP functionality, i.e., the AAP-Nodes, are joined to a pre-defined and well known (to be claimed by Internet Assigned Numbers Authority, IANA) multicast IP address. In this way only these AAP-Nodes will receive the AAP discovery messages.

The AAP-Nodes within the network will receive a multitude of the AAP discovery messages from the same bonding client. The AAP-Nodes may be realized as routers, gateways or other devices being enabled with the AAP functionality within a transport network. Upon this event the AAP-Nodes will reply using an AAP reply message.

The bonding client will receive one or several of AAP reply messages and will be able to reconstruct the logical network topology, in particular the location of cross over nodes, based on the information contained in the one or several of AAP reply messages.

A first aspect of the invention relates to a method for discovery of access aggregation points (AAP) in a network, preferably a transport network of an operator comprising at least one bonding client , at least one access node , configured to provide access aggregation point functionality (AAP-Node), and at least two links between the bonding client and the network, wherein the bonding client performs the following steps. First the bonding client is sending a respective AAP discovery message over each of the at least two available links, intended to be used for bundling resources of the links, wherein the AAP discovery message is different for each of the at least two available links. In a second step the bonding client is receiving at least one AAP reply message from at least one AAP-Node in response to the AAP discovery message.

In a further aspect of the invention the AAP discovery message comprises at least one of the following:
a) a unique ID of the bonding client (CID),
b) an IP address used to send the message (IP),
c) a unique ID of the AAP discovery message (MID) being send via a respective link, and
d) a data structure comprising unique information about the AAP discovery messages being send over the at least two available links from the bonding client, preferably a first vector NIF of MIDs of the AAP discovery messages.

The AAP discovery message optionally further comprises at least one of the following:
e) a Hop Count (HC) defining the number of hierarchy levels of AAP-Nodes the AAP discovery messages will be forwarded to, and
f) at least one Flag for controlling the operation of an AAP-Node, preferably an Enforcement Flag (EF) for indicating that every AAP-Node receiving the discovery message should send a AAP reply message.

According to a further aspect of the invention, the AAP reply message comprises at least one of the following:
i) the unique ID of the bonding client (CID), preferably being copied from the discovery message,
ii) a data structure comprising unique information about the AAP discovery message(s), preferably being copied from the discovery message(s) received at a respective AAP-Node, further preferably a second vector of MID(s), and
iii) a unique ID of the respective AAP-Node, preferably a unique ID of an identified cross over node (SID).

The AAP reply message optionally further comprises:
iv) the Hop Count defining the hierarchy level of the respective AAP-Nodes within the network.

According to a further aspect of the invention, the AAP discovery message is send as a multicast message. The AAP reply message is received as a unicast message via at least one of the at least two available links. According to a further aspect of the invention the AAP discovery message is send as a multicast message and the AAP reply message being received as a unicast message via at least one of the at least two available links.

According to a still further aspect of the invention, the method comprises the step of determining the location of at least one suitable access aggregation point based on the received AAP reply message(s), preferably at the location of the AAP- Node which is a cross over node.

This first aspect of the invention described above can be used in combination with the second aspect as described in the following.

The second aspect of the invention relates to a method for discovery of access aggregation points in a network, preferably a transport network of an operator comprising at least one bonding client, at least one access node, configured to provide AAP functionality, and at least two links between a bonding client and the network, wherein the AAP-Node performs the following steps: The AAP-Node is receiving at least one AAP discovery message being send by the bonding client via a respective link. The AAP-Node is analyzing the received AAP discovery message(s). The AAP-Node is modifying the received AAP discovery message(s) and forwarding the modified AAP discovery message(s) to at least one further access node. Alternatively the AAP-Node is sending at least one AAP reply message in response to the received AAP discovery message(s) to the bonding client. As a further alternative the AAP-Node is modifying the received AAP discovery message(s) and forwarding the modified AAP discovery message(s) to at least one further access node and the AAP-Node is sending at least one AAP reply message in response to the received AAP discovery message(s) to the bonding client.

In a further aspect of the invention the AAP discovery message comprises at least one of the following:
A) a unique ID of the bonding client (CID),
B) an IP address used to send the message (IP),
C) a unique ID of the AAP discovery message (MID) being send via a respective link, and
D) a data structure comprising information about the AAP discovery message(s) being send over the at least two available links from the bonding client, preferably a first vector NIF of MID(s).

The AAP discovery message optionally further comprises at least one of the following:
E) a Hop Count (HC) defining the number of hierarchy levels of AAP-Nodes the AAP discovery messages will be forwarded to, and
F) at least one Flag for controlling the operation of an AAP-Node, preferably an Enforcement flag (EF) for indicating that every AAP-Node receiving the discovery message should send a AAP reply message.

According to a further aspect of the invention, the AAP reply message comprises at least one of the following:
I) the unique ID of the bonding client (CID), preferably being copied from the discovery message,
II) a data structure comprising unique information about the AAP discovery message(s), received at a respective AAP-Node, preferably being copied from the discovery message(s), further preferably a second vector of MID(s), and
III) a unique ID of the respective AAP-Node, preferably a unique ID of an identified cross over router (SID).

The AAP reply message optionally further comprises:
IV) the Hop Count (HC) defining the hierarchy level of the respective AAP-Nodes within the network.

According to a further aspect of the invention, the AAP discovery message is received as a multicast message, and/or the AAP reply message being send as a unicast message via at least one of the at least two available links.

According to a further aspect of the invention the step of analyzing the received AAP discovery message(s) further comprises the steps of reading the unique ID of the bonding client (CID), the unique ID of the AAP discovery message (MID), and the unique information about the received AAP discovery message(s), preferably the first vector NIF of the received AAP discovery message, and determining whether all AAP discovery messages send by the bonding client are received, preferably by comparing the MIDs, of all received AAP discovery messages, having the same CID, with the MIDs comprised in the unique information.

In case that all AAP discovery messages send by the bonding client are received, the method according to this aspect of the invention further comprises the step of sending the at least one AAP reply message to the bonding client, preferably indicating that the respective AAP-Node is a cross over node.

In case that not all AAP discovery messages send by the bonding client are received, the method according to this aspect of the invention is performing the step of modifying the received AAP discovery message(s) and preferably forwarding the modified AAP discovery message(s) to at least one further AAP-Node and/or optionally sending the at least one AAP reply message to the bonding client for all or some discovery messages that have been received. The AAP reply message preferably indicates that the respective AAP-Node is not a cross over node. In that case a semi-optimal AAP can be selected and transport mechanism has to ensure that all packets are routed to the selected AAP.

In the last aspect of the invention, the method of comparing the MID of all received AAP discovery messages having the same CID with the MIDs comprised in the first vector comprises comparing the number of received AAP discovery messages having the same CID with the number of MIDs contained in the first vector of any of the received AAP discovery messages.

According to another aspect of the invention, the method further comprises the step of waiting for a predetermined time (T_{wait}) before performing the steps of modifying the received AAP discovery message(s), and forwarding the modified AAP discovery message(s) to at least one further access node.

According to another aspect of the invention, the AAP-Nodes are arranged in hierarchy levels. The AAP discovery message comprises a Hop Count (HC) defining a number of hierarchy levels of AAP-Nodes (ANs) the AAP discovery messages will be forwarded to.

The method is further comprising the steps of: Reading the Hop Count (HC) of the received AAP discovery message, Comparing the Hop Count (HC) with a predetermined reference value, in case the Hop Count (HC) does not fulfill an end criterion with respect to the predetermined reference value, modifying the Hop Count by decreasing or increasing its value by one to obtain a modified Hop Count (HCmod). Including the modified Hop Count (HCmod) to the modified AAP discovery message(s) to be forwarded to the at least one further AAP-Node, and in case the Hop Count (HC) does fulfill an end criterion with respect to the predetermined reference value, not performing the steps of modifying the received AAP discovery message(s) and forwarding the modified AAP discovery message(s) to at least one further access node.

According to another aspect of the invention, method, further comprising the step of determining whether the AAP discovery message comprises an Enforcement Flag and if the Enforcement Flag is present sending the at least one AAP reply message to the bonding client.

As stated before the first aspect of the invention relating to the method steps performed by the bonding client can be used in combination with the second aspect of the invention relating to the method steps performed by the AAP-Node.

A third aspect of the invention relates to a bonding client, preferably configured to perform the method steps according to the above described first aspect for use in a System for discovery of access aggregation points (AAP) in a network, preferably a transport network of an operator comprising at least one bonding client, at least one access node, configured to provide access aggregation point functionality, and at least two links between the bonding client and the network, wherein the bonding client is configured to send a respective AAP discovery message over each of the at least two available links, intended to be used for bonding resources of the links; and further configured to receive at least one AAP reply message from at least one AAP-Node, in response to the AAP discovery message.

A fourth aspect of the invention relates to an AAP-Node, preferably configured to perform the method steps according to the above described second aspect for use in a system for discovery of access aggregation points (AAP) in a network, preferably a transport network of an operator comprising at least one bonding client, at least one access node, configured to provide access aggregation point functionality (AAP-Node), and at least two links between the bonding client and the network, wherein the AAP-Node is configured to receive at least one AAP discovery message being send by the bonding client via a respective link, and further configured to analyze the received AAP discovery message(s) and further configured to modify the received AAP discovery message(s) and to forward the modified AAP discovery message(s) to at least one further AAP-Node; and/or sending at least one AAP reply message in response to the received AAP discovery message(s) to the bonding client

In the third and the fourth aspect of the invention the bonding client and the AAP-Node are preferably configured to perform some or all the method steps described in the preceding aspects of the invention.

The invention further relates to a system comprising the third aspect of the invention in combination with the fourth aspect of the invention described above.

### BRIEF DESCRIPTION OF THE DRAWINGS

Fig. 1 shows a block diagram of an example of a network structure of a telecommunication network.
Fig. 2 shows a block diagram of the network structure of one of the aspects of the invention, with a hierarchy of access nodes all enabled to provide AAP functionality.

### DETAILED DESCRIPTION OF THE INVENTION

Figure 1 shows a block diagram of a schematic example of a network structure of a telecommunication network, with an access aggregation point (AAP) located close to or at the IP backbone. In this schematic example, three user devices 1, 2 and 3 are shown. Each user device is connected to one or more access points 101, 102, 103 and 104. Each access point is connected to another access point and/or to one or more access nodes 201, 202, 203 and 204. Each access node is connected to at least one of a plurality of transport nodes 301, 302 and 303. Each transport node is connected to one access router 401 and 402. Each of the access router 401 and 402 is connected to an IP backbone 600. An access aggregation point 500 is provided at the IP backbone 600.

Thus, the operator's network comprises a plurality of devices, in this example access points, access nodes, transport nodes and access router points in different hierarchy levels. These devices will be named in the following access nodes. In this example of Figure 1 there are four hierarchy levels present. In other transport networks there may be less or more than four hierarchy levels. One access node is connected via at least one link to at least one other access node. The last access node hierarchy level, is connected to the IP backbone 600 and AAP functionality 500 is provided at the IP backbone 600.

In detail the network structure of Figure 1 is the following:
A first user device 1 is connected via a first link 801 to a first access point 101. A second user device 2, has a first link 802 to a second access point 102 and a second link 803 to a third access point 103. A third user device 3 has one link 804 to a fourth access point 104.

The first access point 101 has a first link 811 to a first access node 201 and a second link 812 to a second access point 102. The second access point 102 has the first link 812 to the first access point 101 and a second link 813 to a second access node 202. A third access point 103 has one link 814 to a third access node 203. A fourth access point 104 has a first link 815 to a fourth access node 204 and a second link 816 to the third access node 203. The first access node 201 has one link 811 to a first transport node 301. The second access node 202 has one link 822 to a second transport node 302. The third access node 203 has one link 823 to a third transport node 303. The fourth access node 204 has one link 824 to the third transport node 303. The first transport node 301 has one link 831 to a first access router point 401. The second transport node 302 has one link 832 to a second access router point 402. The third transport node 303 has one link 833 to the second access router 402. Each of the first and the second access router points 401 and 402 is connected to the IP backbone 600.

In the following the general principle of bonding solutions in a telecommunication network will be described with reference to Figure 1.

Three different bonding scenarios are shown. In the first scenario bonding is performed on behalf of user device 1 by the first access point 101 acting as a bonding client 101. The bonding client 101 bundles the resources of its own backbone link 811, with the resources of backbone link 813 of the second access point 102 via the link 812. The link 812 between bonding client 101 and the second access point 102 can for instance be done using a wired or a wireless connection, for example using Wi-Fi.

In the second scenario the user device 2 is acting as a bonding client 2, the user device itself is performing access bonding. The user device 2 bundles the resources of the link 802 with the second access point 102 and of the link 803 with the third access point 103.

Finally, in scenario three the fourth access point 104 is acting as bonding client 104 and is performing the bonding on behalf of the user device 3. In this case the bonding client 104 bundles the resources of two different backbone links 815 and 816.

It should be mentioned that these three scenarios are simple examples. The three scenarios in reality may not appear isolated from each other, and mixed scenarios are possible.

For the bonding the network connections of any of these approaches an access aggregation point is used.

According to the state of the art the access aggregation point (AAP) 500 is provided at the IP backbone 600 as shown in Figure 1. The AAP 500 terminates connections from bonding clients and performs necessary functionalities to recover streams of packets received over different ways, e.g. recover packet order. Additionally, the access aggregation point 500 performs packet scheduling for the downlink direction, i.e., from the network towards the user devices.

Known solutions work in such a way that the access aggregation point is placed somewhere at the IP backbone 600 and traffic of the different paths is directed to the access aggregation point 500 using tunnels. The inventors found that such an approach does not provide the best performance in terms of delay or signalling/protocol overhead. In order to improve the performance the access aggregation point 500 should be close to the access node or the customers in order to reduce the load in the core network, and to reduce the delay and possible packet reordering/jitter variation for packets between the bonding client and the access aggregation point 500, consequently also between users and their communication targets.

Therefore in future networks the access aggregation point will be located within the transport network of the network operator. In a future network access nodes can be configured to provide AAP functionality. In an ideal case the AAP is provided at the location or close to an access node through which the different packet streams pass. This access node is defined as a cross over node. According to the present invention the bonding can be performed on different AAP-Nodes and in different hierarchical levels.

In the above described second scenario, for instance, a suitable location for providing the access aggregation point functionality would be on access router 402 as this is the cross over node for the two traffic sub-streams; the first one comprising links 802, 813, 822, and 832 and the second one comprising links 803, 814, 823, and 833. In the above described third scenario the access aggregation point functionality should preferably be provided at transport node 303 as this is the cross over node for the two traffic sub-streams; the first one comprising links 816 and 823 and the second one comprising links 815 and 824.

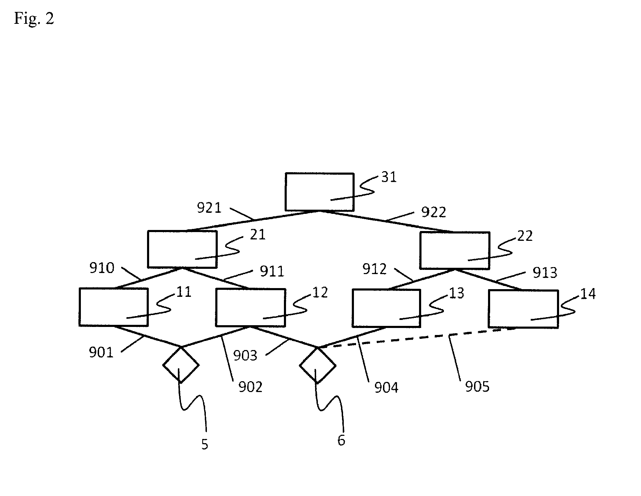

Figure 2 shows a schematic block diagram of the network structure according to one aspect of the invention. The future transport network of an operator comprises a plurality of bonding clients, e.g., user devices or access points, and a plurality of devices, in this example a plurality of access points, a plurality of access nodes, transport nodes or access routers, enabled to provide AAP functionality (AAP-Nodes). In the example shown in Figure 2 the AAP-Nodes are linked in a way to constitute three hierarchy levels.

In detail: A first bonding client 5 has a link 901 to a first AAP-Node 11 and has a link 902 to a second AAP-Node 12. A second bonding client 6 has a link 903 to the second AAP-Node 12, and has a link 904 to a third AAP-Node 13, and has a possible link 905 to a fourth AAP-Node 14. The first AAP-Node 11 has a link 910 to a fifth AAP-Node 21. The second AAP-Node 12 has a link 911 to the fifth AAP-Node 21. The third AAP-Node 13 has a link 912 to a sixth AAP-Node 22. The fourth AAP-Node 14 has a link 913 to the sixth AAP-Node 22. The fifth AAP-Node 21 has a link 921 to a seventh AAP-Node 31. The sixth AAP-Node 22 has a link 922 to the seventh AAP-Node 31. The first through fourth AAP-Nodes belong to a first hierarchy level. The fifth and sixth AAP-Nodes belong to a second hierarchy level. The seventh AAP-Node belongs to a third hierarchy level. Figure 2 is used to describe the method and system for discovery of a suitable AAP-Node for link bonding in detail. In a first example the method is described for a bonding approach of bonding client 5. The AAP discovery messages are send form bonding client 5 via link 901 and link 902 and are received by the respective first and second AAP-Nodes 11 and 12. The data structure comprising unique information, preferably the first NIF vectors of both messages may contain MIDs of both messages; and it is assumed no further links are possible from bonding client 5. The first and second AAP-Nodes 11 and 12 store the information about bonding client (CID) and the AAP discovery message (MID) and forward the multicast messages to the next upstream node, the fifth AAP-Node 21 in the present example. The messages are not resent immediately but only after a configurable amount of time T_{wait} in order to wait for other AAP discovery messages which might be received via different paths.

The fifth AAP -Node 21 has received both AAP discovery messages after a while and compares the information contained in these messages. As both messages have different MIDs but the same CID this indicates to the fifth AAP-Node 21 that it is a cross over node for the two different paths. To determine how many paths are crossing in the fifth AAP-Node 21, the fifth AAP-Node 21 simply has to compare the number of AAP discovery messages received, with the data structure comprising unique information, preferably the first vector NIF, contained in each AAP discovery message. In case the numbers are equal, all available paths are crossing in the fifth AAP-Node 21 and the AAP-Node 21 can immediately start sending AAP reply messages and no further multicast of AAP discovery messages is necessary. In case the numbers are not equal, not all of the available paths are crossing in the fifth AAP-Node 21 and it might not be a suitable location for providing the access aggregation point functionality. In that case the AAP-Node waits for T_{wait} before starting to send AAP reply messages and/or forwarding a modified AAP discovery to at least on further AAP-Node.

Via each of the path from which a AAP discovery message was received, i.e., the first path comprising link 901, AAP-Node 11, and link 910 and the second path comprising link 902, AAP-Node 12, and link 911, a AAP reply message will be send via unicast. Information contained in every message is the same, i.e., all MIDs of the so far received AAP discovery messages are contained. It is necessary to ensure that also temporary links are considered by the bonding client for AAP selection. After reception of even one AAP reply message the bonding client learns the logical topology of access nodes with AAP functionality in the network. In the present example access node 21 is the cross over node for both links 901 and 902 used by the bonding client 5.

In the case the Cross Over AAP-Node has currently limited resources to accept a new bonding client, it might not answer the AAP discovery messages. In this case the AAP-Node forwards a cumulative AAP discovery message (containing both MIDs) to further upstream AAP-Nodes.

In a second example, the bonding client 6 also initiates the AAP discovery process by broadcasting the AAP discovery message via link 903 and link 904. These messages will be received by the second AAP-Node 12 and the third AAP-Node 13. After T_{wait} the second and third AAP-Nodes 12 and 13 resend the AAP discovery messages to their respective upstream AAP-Nodes. The fifth AAP-Node 21 will receive the AAP discovery message via link 911 and the sixth AAP-Node 22 will receive the AAP discovery message via link 912. Again, after the time T_{wait} the AAP discovery messages will be forwarded to further upstream AAP-Nodes. In this example the fifth and sixth AAP-Node 21 and 22 forward the AAP discovery message to the seventh AAP-Node 31.

Finally the AAP discovery messages will be received by AAP-Node 31. Due to the fact that AAP-Node 31 has received two different messages with the same CID but different MIDs and the data structure comprising unique information about the AAP discovery message, preferably the first vector NIF contains both MIDs, the seventh AAP-Node 31 is identified as cross over node and can be used for bonding.

As within the previous example, to determine how many paths are crossing in the seventh AAP- Node 31, the seventh AAP-Node 31 may compare the number of AAP discovery messages received, with the data structure comprising unique information about the AAP discovery message, preferably the length of the first vector NIF contained in each of the AAP discovery messages. In case the numbers are equal, all available paths are crossing in the seventh AAP-Node 31 and the seventh AAP-Node 31 can immediately start sending AAP reply messages via unicast. In the hypothetical case the numbers are not equal not all of the available paths are crossing the seventh AAP-Node 31 and the seventh AAP-Node 31 might not be a suitable location for providing the AAP functionality. In that case the AAP-Node waits for T_{wait} before starting to send AAP reply messages. Via each of the paths from which an AAP discovery message was received an AAP reply message will be send, the information contained in the messages is the same.

The bonding client of any of the above examples will receive multiple AAP reply messages. By analysing these AAP reply messages one or multiple, depending on the network topology, cross over Nodes can be identified. One of these cross over nodes may be selected as AAP responsible for this bonding client.

In another example the second bonding client 6 may have only two access interfaces therewith the bonding client 6 might establish only two links simultaneously. During the discovery process the bonding client may, however, be able to establish link 903, link 904 and link 905. Link 905 is connecting the bonding client 6 to the fourth AAP-Node 14 . It is assumed that the bonding client may at all times be able to setup link 903, but depending on the network situation may only be able to setup either link 904 or link 905. After determining of all available links from the second bonding client 6, the bonding client creates a data structure comprising the unique information, preferably a first vector NIF and sends three AAP discovery messages with separate MID and complete NIF vector containing three MIDs. The processing on the second, third, fourth and fifth AAP-Nodes 12, 13, 14 and 21 happens as described above. However, the sixth AAP-Node 22 in this example receives now two AAP discovery messages. By comparing the MIDs of these two AAP discovery messages with the contained data structure comprising unique information about the AAP discovery message, preferably the first vector NIF, the sixth AAP-Node 22 determines that not all paths are crossing in the sixth AAP-Node 22, only two paths are crossing in the AAP-Node 22. The sixth AAP-Node 22 generates an AAP reply message to the bonding client 6 and sends the AAP reply message back via the available links.

Independently of the connection of the bonding client via link 904 or link 905 the second Bonding Client 6 receives the AAP reply message from the sixth AAP-Node 22 and the complete information is contained in the AAP reply message. Based on the data structure, preferably the second vector, contained in the AAP reply message the bonding client 6 is able to conclude that AAP-Node 22 is the cross over node for links 904 and 905. Since not all paths are crossing in the sixth AAP-Node 22, the sixth AAP-Node 22 will forward the message to the next multicast hierarchy level, i.e., to the AAP-Node 31.

During this step the sixth AAP-Node 22 puts the unicast IP addresses from the bonding client 6 into the AAP discovery message so that the AAP-Nodes in the next hierarchy level might see from which IP addresses the AAP discovery messages have been received. The seventh AAP-Node 31 will receive two AAP discovery messages, the first one from the fifth AAP-Node 21 containing information about link 903 and the second AAP discovery message from the sixth AAP-Node 22 containing information about link 904 and link 905. Comparing the received MIDs with unique information comprised in the data structure of the AAP discovery message, preferably the first vector NIF, the seventh AAP-Node 31 concludes all paths cross via it and generates a AAP reply message to the bonding client via all unicast IP addresses which can be used on the bonding client. No further forwarding for the AAP discovery message is necessary.

Upon reception of the AAP reply messages by the bonding client duplicates are deleted and the bonding client analyses the data structure comprising unique information, preferably the second vector, of the AAP reply message. All three MIDs are included in the AAP reply message from the seventh AAP-Node 31 so that the bonding client can conclude that the seventh AAP-Node 31 is the cross over node for all three links.

As the present invention may be embodied in several forms without departing from the scope or essential characteristics thereof, it should be understood that the above-described embodiments are not limited by any of the details of the foregoing descriptions, unless otherwise specified, but rather should be construed broadly within the scope as defined in the appended claims, and therefore all changes and modifications that fall within the present invention are therefore intended to be embraced by the appended claims. Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### REFERENCES

[1] http://www.telekom.de/privatkunden/zuhause/internet-und-fernsehen/das-ist-hybrid (Stand: 1.7.2015)
[2] Patent Document EP2028895 A1 "Communication method and system for multihoming through a mobile load balancing router"
[3] https://www.viprinet.com/de/technologie (Stand 1.7.2015)
[4] Patent Document EP2887586 A2, " System und Verfahren zum Verbinden von Verbindungen mit einer Zugangsvorrichtung"

## Claims

1. A method for discovery of Access Aggregation Points (AAP) in a network, preferably a transport network of an operator comprising at least one Bonding Client, at least one Access Node, configured to provide Access Aggregation Point functionality (AAP-Node), and at least two links between the Bonding Client and the network, wherein the Bonding Client performs the following steps:
sending a respective AAP discovery message over each of the at least two available links, intended to be used for bonding resources of the links; and
receiving at least one AAP reply message from at least one AAP-Node, in response to the AAP discovery message.

2. The method of claim 1, wherein the AAP discovery message comprises at least one of the following:
a unique ID of the Bonding Client (CID),
an IP address used to send the message (IP),
a unique ID of the AAP discovery message (MID) being send via a respective link, and
a data structure comprising unique information about the AAP discovery messages being send over the at least two available links from the Bonding Client, preferably a first vector NIF of MIDs of the AAP discovery messages, and
wherein the AAP discovery message optionally further comprises at least one of the following:
a Hop Count (HC) defining the number of hierarchy levels of AAP-Nodes the AAP discovery messages will be forwarded to , and
at least one Flag for controlling the operation of an AAP-Node, preferably an Enforcement Flag (EF) for indicating that every AAP-Node receiving the discovery message should send a AAP reply message.

3. The method of claim 1 or 2, wherein the AAP reply message comprises at least one of the following:
the unique ID of the Bonding Client (CID), preferably being copied from the discovery message,
a data structure comprising unique information about the AAP discovery message(s), preferably being copied from the discovery message(s) received at a respective AAP-Node, further preferably a second vector of MID(s), and
a unique ID of the respective AAP-Node, preferably a unique ID of an identified cross over node (SID), and
wherein the AAP reply message optionally further comprises:
the Hop Count defining the hierarchy level of the respective AAP-Nodes within the network.

4. The method of any of claims 1 to 3, wherein the AAP discovery message being send as a multicast message and/or
the AAP reply message being received as a unicast message via at least one of the at least two available links.

5. The method of any of claims 1 to 4, further comprising the step of determining the location of at least one suitable Access Aggregation Point based on the received AAP reply message(s), preferably at the location of the AAP-Node which is a cross over node.

6. A method preferably according to any of claims 1 to 5 for discovery of suitable Access Aggregation Point (AAP) in a network, preferably a transport network of an operator comprising at least one Bonding Client , at least one Access Node, configured to provide Access Aggregation Point functionality (AAP-Node), and at least two links between a Bonding Client and the network, wherein the AAP-Node performs the following steps:
receiving at least one AAP discovery message being send by the Bonding Client via a respective link,
analyzing the received AAP discovery message(s) and
modifying the received AAP discovery message(s) and forwarding the modified AAP discovery message(s) to at least one further AAP-Node; and/or
sending at least one AAP reply message in response to the received AAP discovery message(s) to the Bonding Client.

7. The method of claim 6, wherein the AAP discovery message comprises at least one of the following:
a unique ID of the Bonding Client (CID),
an IP address used to send the message (IP),
a unique ID of the AAP discovery message (MID) being send via a respective link, and
a data structure comprising information about the AAP discovery message(s) being send over the at least two available links from the Bonding Client, preferably a first vector NIF of MID(s), and
wherein the AAP discovery message optionally further comprises at least one of the following:
a Hop Count (HC) defining the number of hierarchy levels of AAP-Nodes the AAP discovery messages will be forwarded to, and
at least one Flag for controlling the operation of an AAP-Node, preferably an Enforcement flag (EF) for indicating that every AAP-Node receiving the discovery message should send a AAP reply message.

8. The method of claim 6 or 7, wherein the AAP reply message comprises at least one of the following:
the unique ID of the Bonding Client (CID), preferably being copied from the discovery message,
a data structure comprising unique information about the AAP discovery message(s), received at a respective AAP-Node, preferably being copied from the discovery message(s), further preferably a second vector of MID(s), and
a unique ID of the respective AAP-Node, preferably a unique ID of an identified cross over router (SID), and
wherein the AAP reply message optionally further comprises:
the Hop Count (HC) defining the hierarchy level of the respective AAP-Nodes within the network.

9. The method of any of claims 6 to 8, wherein the AAP discovery message being received as a multicast message, and/or
the modified AAP discovery message(s) being forwarded as a multicast message and/or
the AAP reply message being send as a unicast message via at least one of the at least two available links.

10. The method of claim 8 or 9, wherein the step of analyzing the received AAP discovery message(s) further comprises the steps:
reading the unique ID of the Bonding Client (CID), the unique ID of the AAP discovery message (MID), and the unique information about the received AAP discovery message(s), preferably the vector NIF of the received AAP discovery message, and
determining whether all AAP discovery messages send by the Bonding Client are received, preferably by comparing the MIDs,of all received AAP discovery messages, having the same CID, with the MIDs comprised in the unique information, wherein
in case that all AAP discovery messages send by the Bonding Client are received, sending the at least one AAP reply message to the Bonding Client, preferably indicating that the respective AAP-Node is a cross over node, and
in case that not all AAP discovery messages send by the Bonding Client are received, performing the step of modifying the received AAP discovery message(s) and forwarding the modified AAP discovery message(s) to at least one further AAP-Node and optionally sending the at least one AAP reply message to the Bonding Client for all or some discovery messages that have been received.

11. The method of claim 10, wherein the step of comparing the MID of all received AAP discovery messages having the same CID with the MIDs comprised in the first vector comprises comparing the number of received AAP discovery messages having the same CID with the number of MIDs contained in the first vector of any of the received AAP discovery messages.

12. The method of any of claims 6 to 11, further comprising the step of:
waiting for a predetermined time (T_{wait}) before performing the steps of modifying the received AAP discovery message(s), and forwarding the modified AAP discovery message(s) to at least one further AAP-Node.

13. A method of any of claim 6 to 12, wherein the AAP-Nodes are arranged in hierarchy levels and the AAP discovery message comprises a Hop Count (HC) defining a number of hierarchy levels of AAP-Nodes the AAP discovery messages will be forwarded to further comprising the steps of:
reading the Hop Count (HC) of the received AAP discovery message,
comparing the Hop Count (HC) with a predetermined reference value,
in case the Hop Count (HC) does not fulfill an end criterion with respect to the predetermined reference value, modifying the Hop Count by decreasing or increasing its value by one to obtain a modified Hop Count (HCmod),
including the modified Hop Count (HCmod) to the modified AAP discovery message(s) to be forwarded to the at least one further AAP-Node, and
in case the Hop Count (HC) does fulfill an end criterion with respect to the predetermined reference value, not performing the steps of modifying the received AAP discovery message(s) and forwarding the modified AAP discovery message(s) to at least one further Access Node.

14. The method of any of claims 6 to 13, further comprising the step of determining whether the AAP discovery message comprises an Enforcement Flag and if the Enforcement Flag is present sending the at least one AAP reply message to the Bonding Client.

15. The method for discovery of Access Aggregation Points (AAP) in a network, preferably a transport network of an operator comprising at least one Bonding Client, at least one Access Node, configured to provide Access Aggregation Point functionality (AAP-Node), and at least two links between the Bonding Client and the network, wherein the Bonding Client performs the steps of any of claims 1 to 5 and wherein the AAP-Node performs the steps of any of claims 6 to 14.

16. A Bonding Client, preferably configured to perform the method of any one of the claims 1 to 5, for use in a System for discovery of Access Aggregation Points (AAP) in a network, preferably a transport network of an operator comprising at least one Bonding Client, at least one Access Node, configured to provide Access Aggregation Point functionality (AAP-Node), and at least two links between the Bonding Client and the network,
wherein the Bonding Client is configured to send a respective AAP discovery message over each of the at least two available links, intended to be used for bonding resources of the links; and
wherein the Bonding Client is further configured to receive at least one AAP reply message from at least one AAP-Node, in response to the AAP discovery message.

17. An AAP-Node, preferably configured to perform the method of any one of the claims 6 to 14, for use in a system for discovery of Access Aggregation Points (AAP) in a network, preferably a transport network of an operator comprising at least one Bonding Client, at least one Access Node, configured to provide Access Aggregation Point functionality (AAP-Node), and at least two links between the Bonding Client and the network,
wherein the AAP-Node is configured to receive at least one AAP discovery message being send by the Bonding Client via a respective link, and
wherein the AAP-Node is further configured to analyze the received AAP discovery message(s) and
wherein the AAP-Node is further configured to modify the received AAP discovery message(s) and to forward the modified AAP discovery message(s) to at least one further AAP-Node; and/or
wherein the AAP-Node is further configured to send at least one AAP reply message in response to the received AAP discovery message(s) to the Bonding Client.

18. A System for discovery of Access Aggregation Points (AAP) in a network, preferably a transport network of an operator comprising at least one Bonding Client according to claim 16 and at least one AAP-Node according to claim 17.
